# EUROPEAN PATENT APPLICATION

(11) **EP 4 159 067 A1**
(43) Date of publication of application: **05.04.2023**
(21) Application number: 21814011.9
(22) Date of filing: 10.05.2021
(51) Int. Cl.: A24F 47/00, B65G 47/00

(54) **AUTOMATIC SHEET INSERTING MACHINE AND SHEET INSERTING METHOD THEREFOR**

(30) Priority: 28.05.2020 CN 202020940240 U; 28.05.2020 CN 202020940145 U; 28.05.2020 CN 202020945702 U; 28.05.2020 CN 202010467057
(71) Applicant: Changzhou Patent Electronic Technology Co., Ltd, Changzhou, Jiangsu 213125 (CN)
(72) Inventor: QIU, Weihua, Changzhou, Jiangsu 213125 (CN)
(74) Representative: Zaboliene, Reda
(86) International application number: PCT/CN2021/092572
(87) International publication number: WO 2021/238626

(57) **Abstract**

Disclosed in the present invention is an automatic sheet inserting machine for inserting electrode sheets into an atomization base. The atomization base comprises a first end and a second end opposite to each other. The automatic sheet inserting machine comprises a feeding mechanism, a transferring mechanism disposed on one side of the feeding mechanism, and a sheet inserting mechanism, a bending mechanism, and a shaping mechanism that are disposed on one side of the transferring mechanism. According to the automatic sheet inserting machine provided in the present invention, the atomization base is delivered to the transferring mechanisms by means of the feeding mechanism, and the transferring mechanism transfers the atomization base to the sheet inserting mechanism, so that the sheet inserting mechanism accurately inserts an electrode sheet into the atomization base. Moreover, the electrode sheet on the atomization base is bent by the bending mechanism and the shaping mechanism, to form a contact surface, and the contact surface closely fits the atomization base, thus facilitating electrical connection with a power device later; and finally, waste materials on the electrode sheet are removed by a waste material removal mechanism. The present invention is simple in operation, accurate in positioning, and high in mounting efficiency. Also provided in the present invention is a sheet inserting method for the automatic sheet inserting machine.

## Description

### TECHNICAL FIELD

The present disclosure relates to the technical field of electrode sheet installation equipment, in particular to an automatic sheet inserting machine and a sheet inserting method.

### BACKGROUND

The aerosol generating device includes an atomizer and a power supply device, the atomizer is provided with a liquid storage chamber therein, the atomizer is provided with an atomizing base mounted with electrode sheets, and the atomizer is electrically connected to the power supply device through the electrode sheets. Under the electric drive of the power supply device, the atomizer heats the aerosol-forming substrate in the liquid storage chamber to form smoke for the user to inhale. However, in the assembly process of the atomizer, the atomizing base is generally taken manually, an entire roll of electrode sheet is manually cut into small pieces, then the small pieces of electrode sheet are manually inserted into the atomizing base; finally, the electrode sheet is manually bent to form a contact surface with the power supply device. Due to the small size of the electrode sheet, it is difficult to hold it manually, the working efficiency of manually taking the atomizing base is also low, and it is difficult to control the alignment of the atomizing base and the electrode sheet; and in the assembly process of the atomizer, the atomizing base is generally taken manually and transported to the next working stage. As a result, the assembly efficiency of the atomizing base and the electrode sheet is low, and the labor cost is high.

### SUMMARY

In view of above, the present disclosure provides an automatic sheet inserting machine with high working efficiency for conveying the atomizing bases and automatically inserting the electrode sheets.

The technical solution adopted by the present disclosure to solve the problem is as follows: an automatic sheet inserting machine configured to insert an electrode sheet into an atomizing base is provided, the atomizing base includes a first end and an opposite second end, the automatic sheet inserting machine includes a feeding mechanism, a conveying mechanism arranged at one side of the feeding mechanism, and a sheet inserting mechanism and a bending mechanism arranged at one side of the conveying mechanism, the sheet inserting mechanism and the bending mechanism are arranged at opposite sides of the conveying mechanism, the feeding mechanism is configured to arrange a plurality of the atomizing bases into a state in which the first ends of the atomizing bases face the same direction and transport the atomizing bases to the conveying mechanism, the conveying mechanism is configured to transport the atomizing base to the sheet inserting mechanism and the bending mechanism in sequence, the sheet inserting mechanism is configured to insert the electrode sheet into the atomizing base from the first end, the bending mechanism configured to act on the second end of the atomizing base to bend the electrode sheet located at the second end of the atomizing base to form a contact surface.

Further, the feeding mechanism includes a circular vibrator, a linear vibrator located at one end of the circular vibrator, and a first sensor located at one side of the linear vibrator, one end of the linear vibrator is connected to the circular vibrator, the other end of the linear vibrator is connected to the conveying mechanism, the first sensor is configured for sensing the atomizing base in the linear vibrator.

Further, the conveying mechanism includes a conveying track, a movable member arranged at one side of the conveying track, a fixture arranged on the movable member, and a first driving assembly and a second driving assembly that drive the movable member to move, the atomizing base is slidably arranged on the conveying track, the fixture corresponds to the atomizing base, the second driving assembly is enabled to drive the movable member to move towards the conveying track so that the fixture clamps the atomizing base, the first driving assembly is enabled to drive the movable member so as to drive the atomizing base to slide on the conveying track.

Further, a guiding groove is provided in the conveying track, the atomizing base is slidably arranged in the guiding groove, a groove wall of the guiding groove is provided with an opening, when the movable member is located close to the conveying track, the fixture passes through the opening to clamp the atomizing base.

Further, the second driving assembly includes a second fixing member, a second cylinder arranged on the second fixing member, and a second sliding block connected to a protruding end of the second cylinder, the second sliding block is provided with a sliding groove, the movable member is slidably arranged in the sliding groove, the first driving assembly is arranged at one end of the movable member.

Further, the sheet inserting mechanism includes a frame, a sliding seat slidably arranged on the frame, a clamping cylinder arranged on the sliding seat, and a clamping block connected to a protruding end of the clamping cylinder, the clamping block is arranged corresponding to the sliding seat; when the clamping cylinder is activated, the clamping block is driven to move toward the sliding seat and clamps the electrode sheet, or when the clamping cylinder is activated, the clamping block is driven to move away from the sliding seat and releases the electrode sheet.

Further, the bending mechanism includes a bending fixing seat arranged at one side of the conveying track, a bending cylinder arranged on the bending fixing seat, and a bending block connected to a protruding end of the bending cylinder, a running direction of the bending cylinder is perpendicular to an axial direction of the electrode sheet on the atomizing base.

Further, the automatic sheet inserting machine further includes a shaping mechanism, the shaping mechanism is configured to act on the electrode sheet located at the second end of the atomizing base, so that the contact surface is closely attached to the atomizing base, the shaping mechanism includes a shaping fixing seat arranged at one side of the conveying track, a shaping cylinder arranged at the shaping fixing seat, and a shaping block connected to a protruding end of the shaping cylinder, a running direction of the shaping cylinder is perpendicular to the contact surface of the electrode sheet.

Further, the automatic sheet inserting machine further includes a delivery mechanism arranged between the feeding mechanism and the conveying mechanism, the delivery mechanism is configured for transporting the atomizing base on the feeding mechanism to the conveying mechanism.

Further, the automatic sheet inserting machine further includes a waste removal mechanism connected to the conveying mechanism, the waste removal mechanism includes a waste removal seat, a rotating block rotatably arranged on the waste removal seat, a waste removal rail arranged on one side of the rotating block, a pushing assembly arranged at one side of the waste removal rail, and a waste removal sliding block slidably arranged at one side of the waste removal rail, the rotating block is provided with a receiving groove for transporting the electrode sheet, the rotating block rotates to cause the receiving groove to align with the waste removal rail, the pushing assembly pushes the atomizing base in the receiving groove to slide to the waste removal rail, the waste removal sliding block slides relative to the waste removal rail and removes waste material of the electrode sheet protruding from the first end of the atomizing base.

A sheet inserting method using the automatic sheet inserting machine as described above for inserting the electrode sheet into the atomizing base is provided, the sheet inserting method includes the following steps:
1) the atomizing base is transported by the feeding mechanism to the conveying mechanism;
2) the conveying mechanism transports the atomizing base to the sheet inserting mechanism, the sheet inserting mechanism inserts the electrode sheet into the atomizing base;
3) the conveying mechanism transports the atomizing base after being inserted with the electrode sheet in step 2) to the bending mechanism, the bending mechanism acts on the second end of the atomizing base to bend the electrode sheet at the second end of the atomizing base to form a contact surface.

The beneficial effects of the present disclosure are as follows: in the automatic sheet inserting machine provided by the present disclosure, the atomizing base is transported to the conveying mechanism through the feeding mechanism, the conveying mechanism precisely conveys the atomizing base to the sheet inserting mechanism, so that the sheet inserting mechanism accurately inserts the electrode sheet into the atomizing base. Further, through the bending mechanism, the electrode sheet on the atomizing base is bent to form a contact surface, which is convenient for the electrical connection with a power supply device later. Finally, the waste material on the electrode sheet is removed by the waste removal mechanism. The operation is simple, the positioning is accurate, and the installation efficiency is high. The present disclosure further provides a sheet inserting method using the above automatic sheet inserting machine, which has a high degree of automation and high work efficiency.

The present disclosure further provides a conveying mechanism and an automatic sheet inserting machine with high working efficiency for conveying the atomizing base.

The technical solution adopted by the present disclosure to solve the problem is as follows: a conveying mechanism for conveying an atomizing base includes a conveying track, a movable member arranged at one side of the conveying track, at least one fixture arranged at the movable member, and a first driving assembly and a second driving assembly that drive the movable member to move, the atomizing base is slidably arranged on the conveying track, the fixture corresponds to the atomizing base, the second driving assembly is enabled to drive the movable member to move towards the conveying track so that the fixture clamps the atomizing base, the first driving assembly is enabled to drive the movable member so as to drive the atomizing base to slide on the conveying track.

Further, a guiding groove is provided in the conveying track, the atomizing base is slidably arranged in the guiding groove, a groove wall of the guiding groove is provided with an opening, when the movable member is located close to the conveying track, the fixture passes through the opening to clamp the atomizing base.

Further, the second driving assembly includes a second fixing member, a second cylinder arranged on the second fixing member, and a second sliding block connected to a protruding end of the second cylinder, the second sliding block is provided with a sliding groove, the movable member is slidably arranged in the sliding groove, the first driving assembly is arranged at one end of the movable member.

Further, the first driving assembly includes a first fixing member, a first cylinder arranged on the first fixing member, and a first sliding block connected to a protruding end of the first cylinder, the movable member is slidably connected to the first sliding block.

Further, the first cylinder and the first sliding block are arranged along an axial direction of the conveying track, the second cylinder and the second sliding block are arranged along a radial direction of the conveying track.

Further, the opening is provided in a bottom groove wall of the guiding groove.

An automatic sheet inserting machine configured for inserting an electrode sheet into an atomizing base is provided, the automatic sheet inserting machine includes the conveying mechanism as described above.

Further, the automatic sheet inserting machine further includes a feeding mechanism connected to the conveying mechanism and a sheet inserting mechanism arranged at one side of the conveying mechanism, the feeding mechanism is configured for transporting the atomizing base to the conveying mechanism, the sheet inserting mechanism is configured for inserting the electrode sheet into the atomizing base.

Further, the feeding mechanism includes a circular vibrator, a linear vibrator located at one end of the circular vibrator, and a first sensor located at one side of the linear vibrator, the first sensor is configured to detect whether there is an atomizing base in the linear vibrator.

Further, the automatic sheet inserting machine further includes a delivery mechanism arranged between the feeding mechanism and the conveying mechanism, the delivery mechanism is configured for transporting the atomizing base on the feeding mechanism to the conveying mechanism.

The beneficial effects of the present disclosure are as follows: in the conveying mechanism provided by the present disclosure, a movable member is arranged at one side of the conveying track, a fixture corresponding to the atomizing base is arranged on the movable member. Under the driving action of the second driving assembly, the movable member moves toward the conveying track, so that the fixture can clamp the atomizing base. Further, under the driving action of the first driving assembly, the movable member is driven to move, so as to drive the atomizing base to slide on the conveying track, so that the atomizing base is accurately transported to the next mechanism, the positioning is accurate, and the transporting efficiency is high. The present disclosure further provides an automatic sheet inserting machine with the above-mentioned conveying mechanism, which has a high degree of automation, accurate installation and positioning of the electrode sheet, and high work efficiency.

The present disclosure further provides a sheet inserting mechanism and an automatic sheet inserting machine for installing the electrode sheet with accurate positioning and high working efficiency.

The technical solution adopted by the present disclosure to solve the problem is as follows: a sheet inserting mechanism for inserting an electrode sheet into an atomizing base includes a frame, a sliding seat slidably arranged on the frame, a clamping cylinder arranged on the sliding seat, and a clamping block connected to a protruding end of the clamping cylinder, the clamping block is arranged corresponding to the sliding seat; when the clamping cylinder is activated, the clamping block is driven to move toward the sliding seat and clamps the electrode sheet, or when the clamping cylinder is activated, the clamping block is driven to move away from the sliding seat and releases the electrode sheet.

Further, the sheet inserting mechanism further includes a pushing cylinder for driving the sliding seat to slide, the pushing cylinder is arranged on the frame, the sliding seat is connected to a protruding end of the pushing cylinder, when the pushing cylinder is activated, the sliding seat is driven to move toward or away from the atomizing base.

Further, the frame is provided with a moving groove, the sliding seat is slidably arranged in the moving groove.

An automatic sheet inserting machine configured for inserting an electrode sheet into an atomizing base is provided, the automatic sheet inserting machine includes the sheet inserting mechanism as described above.

Further, the automatic sheet inserting machine further includes an electrode sheet feeding mechanism arranged at one side of the sheet inserting mechanism, the electrode sheet feeding mechanism is provided with a roll of electrode sheets; the clamping block is located close to the sliding seat and clamps one of the electrode sheets and tears the electrode sheet off.

Further, two adjacent electrode sheets are connected.

Further, the automatic sheet inserting machine further includes a conveying mechanism arranged at one side of the feeding mechanism, the conveying mechanism is configured for conveying the atomizing base; when the clamping cylinder is activated, the clamping block is driven to move toward the sliding seat and clamps the electrode sheet, the sliding seat slides toward the conveying mechanism to insert the electrode sheet into the atomizing base.

Further, the automatic sheet inserting machine further includes a bending mechanism arranged at one side of the conveying mechanism, the bending mechanism acts on one end of the atomizing base to bend the electrode sheet located at the one end of the atomizing base to form a contact surface.

Further, the bending mechanism includes a bending fixing seat arranged at one side of the conveying track, a bending cylinder arranged on the bending fixing seat, and a bending block connected to a protruding end of the bending cylinder.

Further, a running direction of the bending cylinder is perpendicular to an axial direction of the electrode sheet on the atomizing base.

The beneficial effects of the present disclosure are as follows: in the sheet inserting mechanism provided by the present disclosure, the clamping cylinder is arranged on the sliding seat, the protruding end of the clamping cylinder is pivotally connected with the connecting rod, and the other end of the connecting rod is pivotally connected with the clamping block. When the clamping cylinder is activated, the clamping block is driven to move toward the sliding seat and clamps the electrode sheet. Further, the sliding seat slides to insert the electrode sheet into the atomizing base with accurate positioning and high installation efficiency. The present disclosure further provides an automatic sheet inserting machine with the above-mentioned sheet inserting mechanism, which has a high degree of automation, accurate installation and positioning of the electrode sheet, and high work efficiency.

The present disclosure further provides a waste removal mechanism and an automatic sheet inserting machine for removing the waste material of the electrode sheet protruding from one end of the atomizing base.

The technical solution adopted by the present disclosure to solve the problem is as follows: a waste removal mechanism configured for removing waste material of an electrode sheet protruding from one end of the atomizing base is provided, the waste removal mechanism includes a waste removal seat, a rotating block rotatably arranged on the waste removal seat, a waste removal rail arranged on one side of the rotating block, a pushing assembly arranged at one side of the waste removal rail, and a waste removal sliding block slidably arranged at one side of the waste removal rail, the rotating block is provided with a receiving groove for transporting the electrode sheet; the rotating block rotates to cause the receiving groove to align with the waste removal rail, the pushing assembly pushes the atomizing base in the receiving groove to slide to the waste removal rail, the waste removal sliding block slides relative to the waste removal rail and removes waste material of the electrode sheet protruding from one end of the atomizing base.

Further, the waste removal mechanism further includes a rotating assembly for driving the rotating block to rotate, the rotating assembly includes a gear fixedly connected with the rotating block, a rack meshed with the gear, and a driving cylinder for driving the rack to move, the gear is rotatably arranged on the waste removal seat.

Further, the pushing assembly includes a movable cylinder and a pushing block connected to a protruding end of the movable cylinder, the pushing block is arranged corresponding to the waste removal rail.

Further, the waste removal mechanism further includes a waste removal cylinder arranged at one side of the waste removal rail, the waste removal sliding block is connected to a protruding end of the waste removal cylinder.

Further, one side of the waste removal rail is provided with an opening, the waste removal cylinder drives the waste removal sliding block to slide and extends into one end of the waste removal rail through the opening, so as to remove the waste material formed by the electrode sheet protruding from one end of the atomizing base.

Further, each of the waste removal sliding block and the waste removal cylinder has two in number, one waste removal sliding block corresponds to one waste removal cylinder, the waste removal sliding block is connected to the protruding end of a corresponding waste removal cylinder, and the two waste removal sliding blocks are arranged at opposite sides of the waste removal rail.

An automatic sheet inserting machine configured for installing an electrode sheet onto an atomizing base is provided, the automatic sheet inserting machine includes the waste removal mechanism as described above.

Further, the automatic sheet inserting machine further includes a conveying mechanism connected with the waste removal mechanism, the conveying mechanism is configured for conveying the atomizing base, the rotating block rotates relative to the waste removal seat, so that the receiving groove is aligned with the conveying mechanism or the receiving groove is aligned with the waste removal rail.

Further, the automatic sheet inserting machine further includes a sheet inserting mechanism arranged at one side of the conveying mechanism, the sheet inserting mechanism is configured for inserting the electrode sheet into the atomizing base.

Further, the automatic sheet inserting machine further includes a bending mechanism arranged at one side of the conveying mechanism, the bending mechanism acts on one end of the atomizing base to bend the electrode sheet inserted in the atomizing base to form a contact surface.

The beneficial effects of the present disclosure are as follows: in the waste removal mechanism provided by the present disclosure, the rotating block is rotatably arranged on the waste removal seat, the waste removal rail is arranged at one side of the rotating block, and the waste removal sliding block is arranged at one side of the waste removal rail. The rotating block rotates relative to the waste removal fixing seat, the atomizing base on the rotating block is transported to the waste removal rail, and the atomizing base is rotated by a certain angle, so that the end of the atomizing base with the waste material is arranged corresponding to the waste removal sliding block, and the waste removal sliding block moves and removes the waste material protruding from one end of the atomizing base and formed by the electrode sheet with accurate positioning, simple operation and high work efficiency. The present disclosure further provides an automatic sheet inserting machine with the above-mentioned waste removal mechanism, which has a high degree of automation and high work efficiency.

### BRIEF DESCRIPTION OF THE DRAWINGS

The following further describes the present disclosure with reference to the accompanying drawings and embodiments.
FIG. 1 is a block diagram of the automatic sheet inserting machine of the present disclosure;
FIG. 2 is a schematic diagram of the feeding mechanism of the automatic sheet inserting machine shown in FIG. 1;
FIG. 3 is a schematic diagram of the delivery mechanism of the automatic sheet inserting machine shown in FIG. 1;
FIG. 4 is a schematic diagram of the conveying mechanism of the automatic sheet inserting machine shown in FIG. 1;
FIG. 5 is a schematic diagram of the sheet inserting mechanism of the automatic sheet inserting machine shown in FIG. 1;
FIG. 6 is a schematic diagram of the bending mechanism of the automatic sheet inserting machine shown in FIG. 1;
FIG. 7 is a schematic diagram of the shaping mechanism of the automatic sheet inserting machine shown in FIG. 1;
FIG. 8 is a schematic diagram of the waste removal mechanism of the automatic sheet inserting machine shown in FIG. 1;
FIG. 9 is a schematic diagram of the atomizer in the present disclosure;
FIG. 10 is a cross-sectional view of the atomizer shown in FIG. 9.

The part names and reference signs shown in the figures are as follows:

| | | |
|---|---|---|
| feeding mechanism 10 | delivery mechanism 20 | conveying mechanism 30 |
| sheet inserting mechanism 40 | bending mechanism 50 | shaping mechanism 60 |
| waste removal mechanism 70 | circular vibrator 11 | linear vibrator 12 |
| first sensor 13 | delivery main body 21 | delivery cylinder 22 |
| delivery sliding block 23 | delivery groove 211 | feeding port 212 |
| inserting slot 2031 | movable member 32 | first driving assembly 34 |
| first fixing member 341 | first cylinder 342 | first sliding block 343 |
| second driving assembly 35 | second fixing member 351 | second cylinder 352 |
| second sliding block 353 | sliding groove 3531 | fixture 33 |
| frame 41 | sliding seat 42 | pushing cylinder 43 |
| clamping cylinder 44 | connecting rod 45 | clamping block 46 |
| bending fixing seat 51 | bending cylinder 52 | bending block 53 |
| shaping fixing seat 61 | shaping cylinder 62 | shaping block 63 |
| waste removal seat 71 | rotating assembly 73 | sealing ring 207 |
| rotating block 72 | gear 731 | rack 732 |
| driving cylinder 733 | receiving groove 721 | waste removal rail 74 |
| waste removal sliding block 75 | waste removal cylinder 76 | atomizer 200 |
| liquid storage member 201 | atomizing assembly 202 | atomizing base 203 |
| electrode sheet 204 | atomizing tube 2021 | liquid guiding member 2022 |
| heating member 2023 | atomizing chamber 2024 | liquid inlet 2025 |
| liquid storage chamber 2012 | vent tube 2011 | mouthpiece 205 |
| smoke outlet 2051 | sealing member 206 | movable groove 741 |
| automatic sheet inserting machine 100 | electrode sheet feeding mechanism 80 | |

### DETAILED DESCRIPTION OF PREFERRED EMBODIMENTS

The present disclosure will now be described in detail with reference to the accompanying drawings. These figures are simplified schematic diagrams, which only illustrate the basic structure of the present disclosure in a schematic manner, so they only show the structures related to the present disclosure.

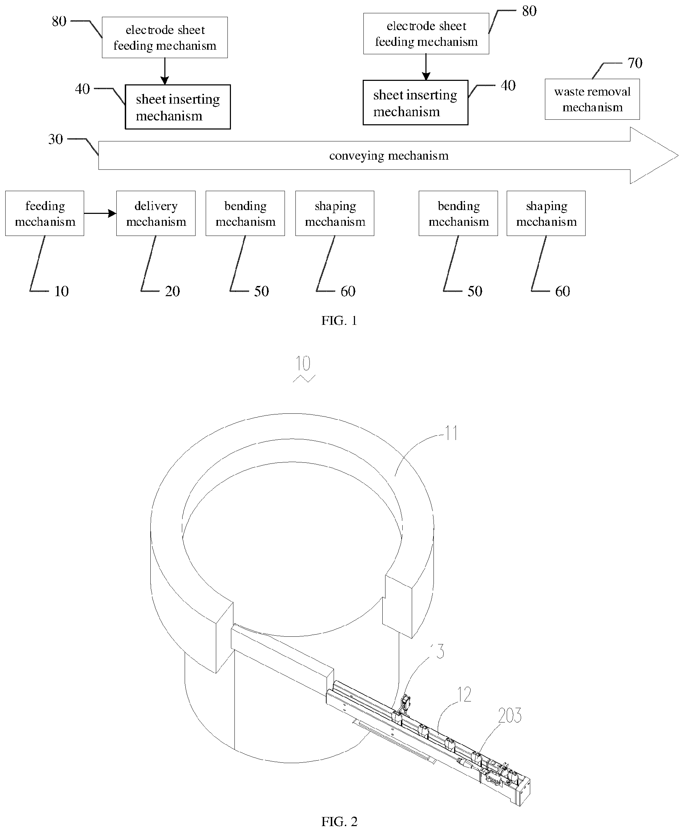

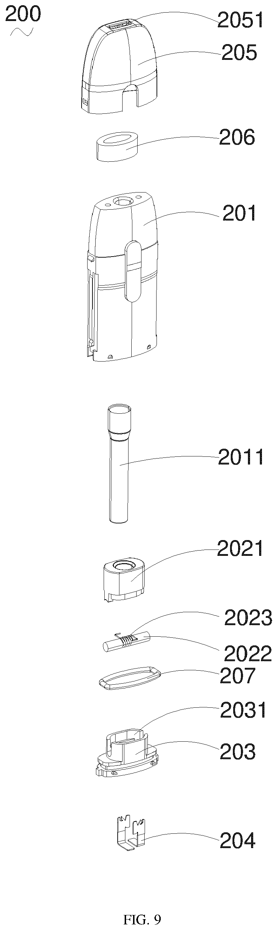

As shown in FIG. 1 and FIG. 9, the present disclosure provides an automatic sheet inserting machine 100, the automatic sheet inserting machine 100 is used for an aerosol generating device. The aerosol generating device includes an atomizer 200 and a power supply device. A liquid storage chamber 2012 for storing aerosol-forming substrate is formed in the atomizer 200. An atomizing base 203 is received in the atomizer 200. Electrode sheets 204 are mounted on the atomizing base 203. The atomizer 200 is electrically connected to the power supply device through the electrode sheets 204, so that the atomizer 200 is electrically driven by the power supply device to heat the aerosol-forming substrate supplied from the liquid storage chamber 2012 to form smoke for the user to inhale. The automatic sheet inserting machine 100 is configured for inserting the electrode sheet 204 into the atomizing base 203, and then the automatic sheet inserting machine 100 bends the electrode sheet 204 to form a contact surface, so that the electrode sheet 204 is electrically connected to the power supply device through the contact surface.

The atomizing base 203 includes a first end and a second end that are arranged oppositely. The weight of the second end of the atomizing base 203 is greater than the weight of the first end of the atomizing base 203. The automatic sheet inserting machine 100 inserts the electrode sheet 204 into the atomizing base 203 from the first end of the atomizing base 203 until the electrode sheet 204 penetrates through the atomizing base 203 and is protruded out of the second end of the atomizing base 203. The automatic sheet inserting machine 100 bends the portion of the electrode sheet 204 located at the second end of the atomizing base 203 to form a contact surface. However, the portion of the electrode sheet 204 protruding out of the first end of the atomizing base 203 forms as waste material.

The automatic sheet inserting machine 100 includes a feeding mechanism 10, a delivery mechanism 20, a conveying mechanism 30 disposed at one end of the delivery mechanism 20, and a sheet inserting mechanism 40, a bending mechanism 50, a shaping mechanism 60 and a waste removal mechanism 70 located at one side of the conveying mechanism 30.

Please refer to FIG. 1 and FIG. 2, the feeding mechanism 10 is configured to arrange a plurality of the atomizing bases 203 into a state in which the first ends of the atomizing bases 203 face the same direction by vibration, and transport the atomizing bases 203 to the delivery mechanism 20. The delivery mechanism 20 is configured for receiving the atomizing bases 203 transported by the feeding mechanism 10, and delivering the atomizing bases 203 to the conveying mechanism 30 one by one. The conveying mechanism 30 is configured to transport the atomizing base 203 to the sheet inserting mechanism 40, the bending mechanism 50, the shaping mechanism 60 and the waste removal mechanism 70 in sequence. The sheet inserting mechanism 40 is configured to take off a piece of electrode sheet 204 from the rolled electrode sheet 204, hold one end of the electrode sheet 204 and insert the electrode sheet 204 into the atomizing base 203. The bending mechanism 50 is configured for bending the electrode sheet 204. The bending mechanism 50 is located at the other side of the conveying mechanism 30 relative to the sheet inserting mechanism 40. The bending mechanism 50 acts on the second end of the atomizing base 203 to bend the electrode sheet 204 at the second end of the atomizing base 203 to form a contact surface. The shaping mechanism 60 is configured to further act on the electrode sheet 204 located at the second end of the atomizing base 203, so that the contact surface is closely attached to the atomizing base 203. The waste removal mechanism 70 is configured to remove wastes formed by the end of the electrode sheet 204 that is held by the sheet inserting mechanism 40.

Specifically, referring to FIG. 2, the feeding mechanism 10 includes a circular vibrator 11, a linear vibrator 12 located at one end of the circular vibrator 11, and an air booster and a first sensor 13 located at one side of the linear vibrator 12. The front end of the circular vibrator 11 is connected to the linear vibrator 12. The first sensor 13 is located above one end of the linear vibrator 12 adjacent to the circular vibrator 11. The first sensor 13 is configured to detect whether there is an atomizing base 203 at the position corresponding to the first sensor 13 in the linear vibrator 12. When it is detected that there is no atomizing base 203 at the position corresponding to the first sensor 13 in the linear vibrator 12, the circular vibrator 11 works; when it is detected that there is an atomizing base 203 in the position corresponding to the first sensor 13 in the linear vibrator 12, the circular vibrator 11 stops working. When the atomizing bases 203 are fed through the circular vibrator 11, the circular vibrator 11 arranges the atomizing bases 203 into a state in which the first ends of the atomizing bases 203 face the same direction, and then transports them to the linear vibrator 12. The linear vibrator 12 transports the atomizing bases 203 to the delivery mechanism 20. The air outlet of the air booster is arranged corresponding to the linear vibrator 12. The air booster blows the atomizing base 203 to move toward the delivery mechanism 20 rapidly. In this embodiment, the first sensor 13 is an optical sensor.

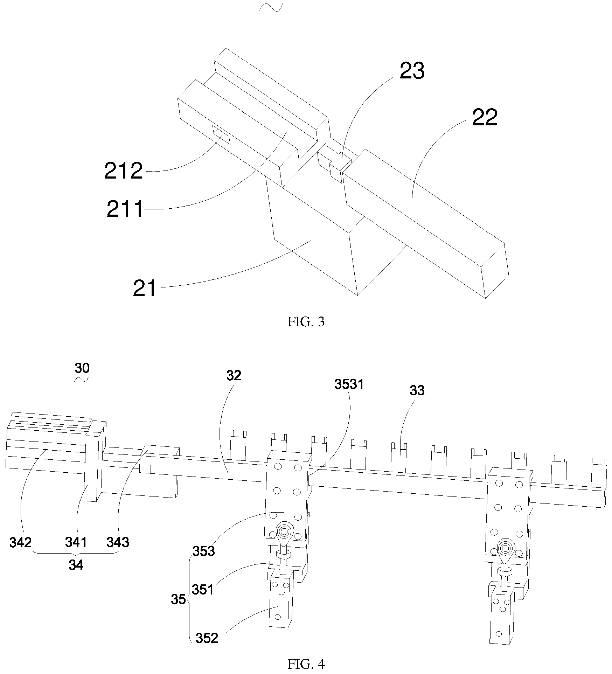

Referring to FIG. 3, the delivery mechanism 20 includes a delivery main body 21, a delivery cylinder 22 arranged at one side of the delivery main body 21, and a delivery sliding block 23 arranged at one end of the delivery cylinder 22. The delivery main body 21 is recessed to form a delivery groove 211 penetrating through opposite ends of the delivery main body 21. The delivery main body 21 is provided with a feeding port 212, and the feeding port 212 is communicated with the delivery groove 211. The feeding port 212 is arranged corresponding to the linear vibrator 12. The delivery sliding block 23 is connected to the protruding end of the delivery cylinder 22. The delivery sliding block 23 is arranged corresponding to one end of the delivery groove 211, the other end of the delivery groove 211 is arranged corresponding to the conveying mechanism 30. When the atomizing base 203 on the linear vibrator 12 is conveyed to the delivery groove 211 through the feeding port 212, the delivery cylinder 22 is activated, the delivery cylinder 22 drives the delivery sliding block 23 to slide in the delivery groove 211, thereby transporting the atomizing base 203 in the delivery groove 211 to the conveying mechanism 30 located at the other end of the delivery groove 211. Further, when the delivery sliding block 23 is located in the delivery groove 211, the delivery sliding block 23 blocks the feeding port 212 so as to prevent the next atomizing base 203 from entering the delivery groove 211 and causing congestion. After the atomizing base 203 is transported, the delivery cylinder 22 retracts, and drives the delivery sliding block 23 to move away from the delivery groove 211, and the next atomizing base 203 is transported into the delivery groove 211 through the feeding port 212.

Referring to FIG. 4, the conveying mechanism 30 includes a conveying track (not shown), a movable member 32 arranged at one side of the conveying track, a fixture 33 arranged on the movable member 32, and a first driving assembly 34 and a second driving assembly 35 that drive the movable member 32 to move. A guiding groove is provided in the conveying track, one end of the guiding groove is arranged corresponding to the delivery groove 211 of the delivery main body 21. The atomizing base 203 is transported into the guiding groove by the delivery mechanism 20. The groove wall of the guiding groove is provided with an opening. In this embodiment, the opening is provided in the bottom groove wall of the guiding groove. The first driving assembly 34 includes a first fixing member 341, a first cylinder 342 arranged on the first fixing member 341, and a first sliding block 343 connected to the protruding end of the first cylinder 342. The second driving assembly 35 includes a second fixing member 351, a second cylinder 352 arranged on the second fixing member 351, and a second sliding block 353 connected to the protruding end of the second cylinder 352. The second sliding block 353 is provided with a sliding groove 3531, and the movable member 32 is slidably arranged in the sliding groove 3531. One end of the movable member 32 is slidably connected with the first sliding block 343. The movable member 32 is located under the conveying track. The running direction of the first cylinder 342 is consistent with the sliding direction of the movable member 32 in the sliding groove 3531. The second driving assembly 35 drives the movable member 32 to move toward or move away from the conveying track. When the movable member 32 is close to the conveying track, the fixture 33 clamps the atomizing base 203 in the conveying track, and then, the first driving assembly 34 drives the movable member 32 to slide on the conveying track and accurately move to the next mechanism. The fixtures 33 are arranged at intervals along the axial direction on the movable member 32, the number of the fixture 33 is at least one. In this embodiment, there are plurality of fixtures 33. Specifically, the number of the fixture 33 is not limited here, it only needs to satisfy that each fixture 33 is arranged corresponding to one of the atomizing bases 203, so that any one of the atomizing bases 203 can be accurately moved on the conveying track. It can be understood that in other embodiments, there is only one atomizing base 203 in the conveying track at any time point, and the number of the fixture 33 may be one, so that the fixture 33 drives the atomizing base 203 to slide to each mechanism.

In this embodiment, the first cylinder 342 and the first sliding block 343 are arranged along the axial direction of the conveying track, while the second cylinder 352 and the second sliding block 353 are arranged along the radial direction of the conveying track. After the delivery mechanism 20 transports the atomizing base 203 in the delivery groove 211 into the guiding groove, the first cylinder 342 is activated, the first cylinder 342 drives the first sliding block 343 so as to accordingly drive the movable member 32 to slide in the sliding groove 3531, so that the movable member 32 slides in the direction close to the delivery mechanism 20. When the first driving assembly 34 drives the movable member 32 to move to the position of being located under one end of the conveying track close to the delivery mechanism 20, the first cylinder 342 stops working, and the second cylinder 352 is activated, the second cylinder 352 drives the second sliding block 353 so as to drive the movable member 32 to move in the radial direction of the conveying track toward the conveying track, and during the moving process, the movable member 32 slides relative to the first sliding block 343 in the radial direction of the conveying track, the fixture 33 on the movable member 32 extends into the guiding groove through the opening and clamps a corresponding atomizing base 203, then the second cylinder 352 stops working, and the first cylinder 342 is activated, the first cylinder 342 drives the first sliding block 343 so as to drive the movable member 32 to move away from the delivery mechanism 20, that is, the movable member 32 drives the atomizing base 203 to move in the direction toward the sheet inserting mechanism 40, and then, the first cylinder 342 stops working, the second cylinder 352 is activated, the second cylinder 352 drives the movable member 32 to move downward in the radial direction of the conveying track, so that the fixture 33 moves away from the guiding groove through the opening and is separated from the atomizing base 203. Thereafter, the first cylinder 342 drives the movable member 32 to return to its original position, and the next round of transportation of the atomizing base 203 is performed. It can be understood that, in other implementations not shown, the opening provided by the conveying track may also be arranged in other orientations, and the movable member 32, the fixture 33, the first driving assembly 34 and the second driving assembly 35 are correspondingly arranged in other orientations on the conveying track, it only needs to satisfy that under the driving of the second driving assembly 35, the movable member 32 is enabled to move toward or move away from the conveying track, when the movable member 32 is close to the conveying track, the fixture 33 clamps the atomizing base 203, and the first driving assembly 34 can drive the movable member 32 so as to drive the atomizing base 203 to slide along the axial direction in the conveying track.

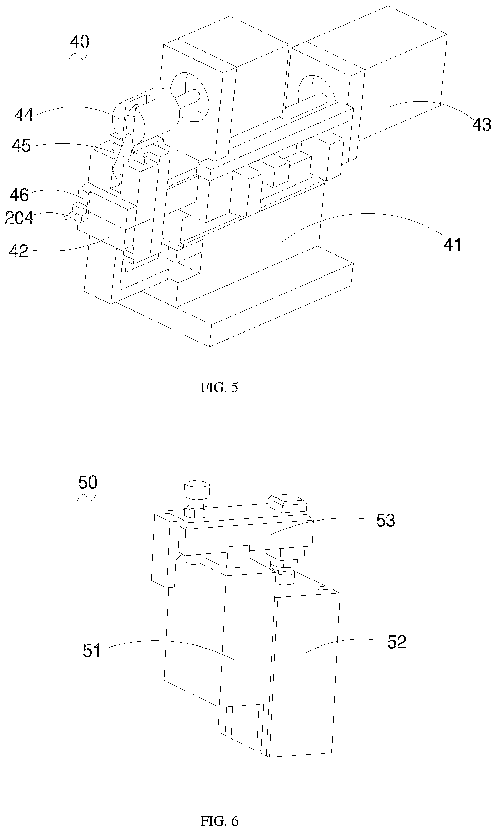

Referring to FIG. 5, the sheet inserting mechanism 40 includes a frame 41, a sliding seat 42 slidably arranged on the frame 41, a pushing cylinder 43 for driving the sliding seat 42 to slide, a clamping cylinder 44 arranged on the sliding seat 42, a connecting rod 45 pivotally connected to the protruding end of the clamping cylinder 44, and a clamping block 46 pivotally connected to the other end of the connecting rod 45. The clamping block 46 is arranged corresponding to the sliding seat 42. When the clamping cylinder 44 is activated, the clamping block 46 is driven to move toward or away from the sliding seat 42. When the pushing cylinder 43 is activated, the sliding seat 42 is driven to move toward or away from the conveying track.

The frame 41 is provided with a moving groove, the sliding seat 42 is slidably arranged in the moving groove, the sliding seat 42 is connected to the protruding end of the pushing cylinder 43. When the pushing cylinder 43 is activated, the sliding seat 42 is driven to slide relative to the frame 41 so as to move toward or move away from the conveying track. When the clamping cylinder 44 is activated, the connecting rod 45 is driven to move, the connecting rod 45 then drives the clamping block 46 to move, and the clamping block 46 moves in the direction of approaching the sliding seat 42 and abuts against the sliding seat 42.

It can be understood that, in other embodiments, the connecting rod 45 may be omitted from the sheet inserting mechanism 40, the clamping block 46 is directly driven by the clamping cylinder 44 to move toward or move away from the sliding seat 42.

In this embodiment, as shown in FIG. 1, the automatic sheet inserting machine 100 further includes an electrode sheet feeding mechanism 80 for transporting the electrode sheets 204. The electrode sheet feeding mechanism 80 is provided with a roll of electrode sheets 204, two adjacent electrode sheets 204 are connected, so that each of the electrode sheets 204 can be easily torn off from the rolled electrode sheets 204 by an external force. The electrode sheet feeding mechanism 80 is arranged at one side of the sheet inserting mechanism 40, and the sheet inserting mechanism 40 is arranged adjacent to the conveying track.

Please refer to FIG. 5 again, when the conveying mechanism 30 conveys the atomizing base 203 to the sheet inserting mechanism 40, the clamping cylinder 44 begins to work, the clamping cylinder 44 drives the connecting rod 45 to rotate, the connecting rod 45 drives the clamping block 46 to rotate in the direction of approaching the sliding seat 42, and at the same time, the clamping block 46 removes a piece of electrode sheet 204 from the rolled electrode sheets 204, then the clamping block 46 abuts against the sliding seat 42, so that the electrode sheet 204 is clamped between the clamping block 46 and the sliding seat 42; at this time, the clamping cylinder 44 stops working, and the pushing cylinder 43 begins to work, the pushing cylinder 43 pushes the sliding seat 42 to move in the direction of approaching the conveying track, and accordingly the sliding seat 42 drives the clamping cylinder 44 and the clamping block 46 to move in the direction of approaching the conveying track, so that the electrode sheet 204 clamped between the clamping block 46 and the sliding seat 42 is inserted into the atomizing base 203 from the first end of the atomizing base 203. Thereafter, the clamping cylinder 44 begins to work, the clamping cylinder 44 drives the connecting rod 45 to rotate, the connecting rod 45 drives the clamping block 46 to move relative to the sliding seat 42 so as to release the clamping on the electrode sheet 204. Finally, the pushing cylinder 43 begins to work, the pushing cylinder 43 drives the sliding seat 42 so as to drive the clamping cylinder 44 and the clamping block 46 to move in a direction away from the conveying track, so as to return to the original position, and then the next round of clamping of the electrode sheet 204 is performed.

Please refer to FIG. 1 and FIG. 6, the atomizing base 203 mounted with the electrode sheet 204 is transferred to the bending mechanism 50 under the conveyance of the conveying mechanism 30. The bending mechanism 50 and the sheet inserting mechanism 40 are arranged at opposite sides of the conveying track in the radial direction of the conveying track. The bending mechanism 50 includes a bending fixing seat 51 arranged at one side of the conveying track, a bending cylinder 52 arranged on the bending fixing seat 51, and a bending block 53 connected to the protruding end of the bending cylinder 52. The running direction of the bending cylinder 52 is perpendicular to the axial direction of the electrode sheet 204 on the atomizing base 203. When the bending cylinder 52 is activated, the bending cylinder 52 drives the bending block 53 to move, the moving direction of the bending block 53 is perpendicular to the axial direction of the electrode sheet 204, so that the portion of the electrode sheet 204 located at the second end of the atomizing base 203 is bent to form a contact surface.

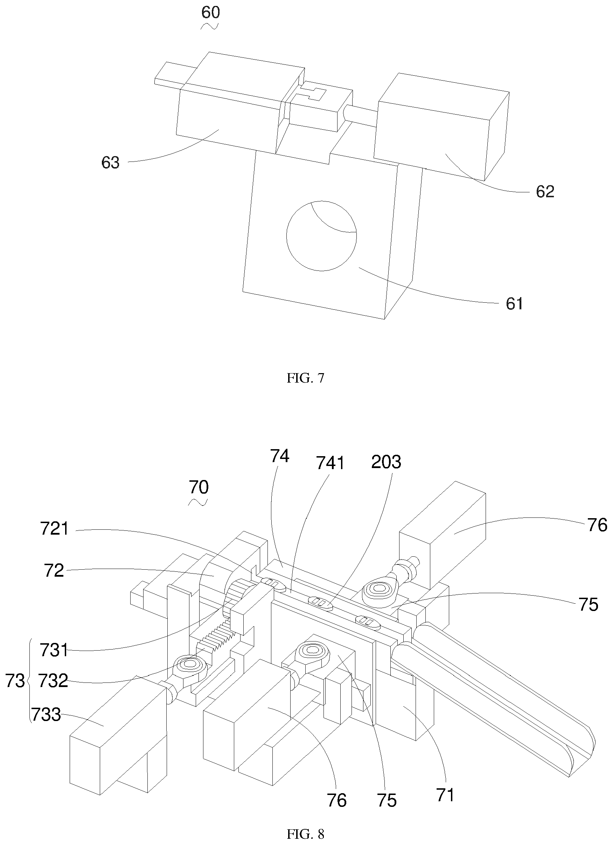

Please refer to FIG. 7, the atomizing base 203 after passing through the bending mechanism 50 is transported to the shaping mechanism 60 under the conveyance of the conveying mechanism 30. The shaping mechanism 60 and the bending mechanism 50 are arranged on the same side of the conveying track. The shaping mechanism 60 includes a shaping fixing seat 61 arranged at one side of the conveying track, a shaping cylinder 62 arranged on the shaping fixing seat 61, and a shaping block 63 connected to the protruding end of the shaping cylinder 62. The running direction of the shaping cylinder 62 is perpendicular to the contact surface of the electrode sheet 204. When the shaping cylinder 62 is activated, the shaping cylinder 62 drives the shaping block 63 to move toward the second end of the atomizing base 203 mounted with the electrode sheet 204, the shaping block 63 abuts against the contact surface of the electrode sheet 204 and further presses the contact surface of the electrode sheet 204 towards the atomizing base 203, so that the contact surface and the atomizing base 203 are attached more closely so as to prevent the electrode sheet 204 from loosening to cause poor contact with the power supply device when the atomizer 200 is assembled with the power supply device.

In this embodiment, please refer to FIG. 1 and FIG. 9, the atomizing base 203 is provided with two electrode sheets 204, one of the electrode sheets 204 is electrically connected to one of the positive and negative electrodes of the power supply device, and the other electrode sheet 204 is electrically connected to the other electrode of the positive and negative electrodes of the power supply device. Therefore, each of the sheet inserting mechanism 40, the bending mechanism 50 and the shaping mechanism 60 has two in number, wherein one sheet inserting mechanism 40, one bending mechanism 50 and one shaping mechanism 60 are respectively responsible for installing one electrode sheet 204, bending the electrode sheet 204 and shaping the electrode sheet 204, and the another sheet inserting mechanism 40, the another bending mechanism 50 and the another shaping mechanism 60 are respectively responsible for installing the another electrode sheet 204, bending the another electrode sheet 204 and shaping the another electrode sheet 204. It can be understood that in other embodiments not shown, the number of the sheet inserting mechanism 40, the bending mechanism 50 and the shaping mechanism 60 may also be one, but the sheet inserting mechanism 40 is provided with two clamping blocks 46, the bending mechanism 50 is provided with two bending blocks 53 and the shaping mechanism 60 is provided with two shaping blocks 63, so as to simultaneously realize the installation of two electrode sheets 204, the bending of two electrode sheets 204 and the shaping of two electrode sheets 204 at the same time.

It is understood that in other embodiments not shown, the delivery mechanism 20 may be omitted, the feeding mechanism 10 is connected with the conveying mechanism 30, the atomizing base 203 is directly transported by the feeding mechanism 10 to the conveying mechanism 30.

The pushing cylinder 43 drives the sliding seat 42 to move, thereby inserting the electrode sheet 204 clamped between the clamping block 46 and the sliding seat 42 into the atomizing base 203, then the end of the electrode sheet 204 that is clamped by the clamping block 46 and the sliding seat 42 forms the waste material. Before the atomizing base 203 is assembled with other components, the waste removal mechanism 70 needs to be used to remove the waste on the atomizing base 203.

Please refer to FIG. 8, the atomizing base 203 after passing through the shaping mechanism 60 is transported to the waste removal mechanism 70 under the conveyance of the conveying mechanism 30. The waste removal mechanism 70 includes a waste removal seat 71, a rotating block 72 rotatably arranged on the waste removal seat 71, a rotating assembly 73 for driving the rotating block 72 to rotate, a waste removal rail 74 arranged on one side of the rotating block 72, and a pushing block and a waste removal sliding block 75 which are slidably arranged at one side of the waste removal rail 74.

The rotating block 72 is pivotally connected to the waste removal seat 71. The rotating assembly 73 includes a gear 731 fixedly connected with the rotating block 72, a rack 732 meshed with the gear 731, and a driving cylinder 733 for driving the rack 732 to move. The rotating block 72 is provided with a receiving groove 721. The gear 731 is rotatably arranged on the waste removal seat 71. The rack 732 is slidably arranged on the waste removal seat 71. The waste removal mechanism 70 further includes a movable cylinder for driving the pushing block to slide and a waste removal cylinder 76 for driving the waste removal sliding block 75 to slide. One end of the pushing block is connected to the protruding end of the movable cylinder. The waste removal sliding block 75 is connected to the protruding end of the waste removal cylinder 76. One end of the waste removal rail 74 is disposed close to the rotating block 72. A movable groove 741 is provided in the waste removal rail 74. The atomizing base 203 slides in the movable groove 741 of the waste removal rail 74. The rotating assembly 73 drives the rotating block 72 to rotate, so that the receiving groove 721 is aligned with the conveying mechanism 30 or the receiving groove 721 is aligned with the movable groove 741. One side of the waste removal rail 74 is provided with an opening, and the opening is communicated with the lower side of the waste removal rail 74. The waste removal cylinder 76 can drive the waste removal sliding block 75 to slide and extend through the opening to the lower side of the waste removal rail 74.

When the atomizing base 203 on the conveying mechanism 30 is transported to the receiving groove 721 of the rotating block 72, the driving cylinder 733 begins to work, the driving cylinder 733 drives the rack 732 to move. Due to the meshing effect of the rack 732 and the gear 731, the gear 731 is rotated relative to the waste removal seat 71, and then the rotating block 72 rotates under the driving of the gear 731 to cause the receiving groove 721 of the rotating block 72 to align with the waste removal rail 74, the movable cylinder works to dive the pushing block to push the atomizing base 203 in the receiving groove 721 to slide to the waste removal rail 74, and push the atomizing base 203 on the waste removal rail 74 to slide along the waste removal rail 74; then, the driving cylinder 733 retracts, the rotating assembly 73 drives the rotating block 72 to reset. At this time, the bent end of the electrode sheet 204 on the atomizing base 203 faces upwards, and the waste-forming end of the electrode sheet 204 faces downwards. When the atomizing base 203 passes the waste removal sliding block 75, the waste removal cylinder 76 works and drives the waste removal sliding block 75 to pass through the opening and push the end of the atomizing base 203 provided with the electrode waste, so that the end of the electrode sheet 204 with the waste material is bent and separated from the main body of the electrode sheet; thus, the waste material is removed, and the waste material directly falls into a collection basket located at the lower side of the waste removal rail 74, which is convenient for collection. The rotation of the rotating block 72 drives the atomizing base 203 to rotate a certain angle, so that the waste material protruding at one end of the atomizing base 203 is aligned with the waste removal sliding block 75.

Since the atomizing base 203 is provided with two electrode sheets 204, each of the waste removal sliding block 75 and the waste removal cylinder 76 has two in number. One waste removal sliding block 75 corresponds to one electrode sheet 204, one waste removal cylinder 76 corresponds to one waste removal sliding block 75, so that the waste removal cylinder 76 drives a corresponding waste removal sliding block 75 to remove the waste material on a corresponding electrode sheet 204. It can be understood that, in other embodiments not shown, the movable cylinder and the pushing block can also be replaced by an equipment capable of generating high-pressure gas, the atomizing base 203 in the receiving groove 721 is blown to the waste removal rail 74 by high-pressure gas. The assembly for generating the high-pressure gas or the combination of the movable cylinder and the pushing block constitutes a pushing assembly.

It can be understood that, in this embodiment, the automatic sheet inserting machine 100 further includes a controller. The controller is electrically connected with the feeding mechanism 10, the delivery mechanism 20, the conveying mechanism 30, the sheet inserting mechanism 40, the bending mechanism 50, the shaping mechanism 60 and the waste removal mechanism 70. The controller is configured to control the start or stop of each of the above mechanisms.

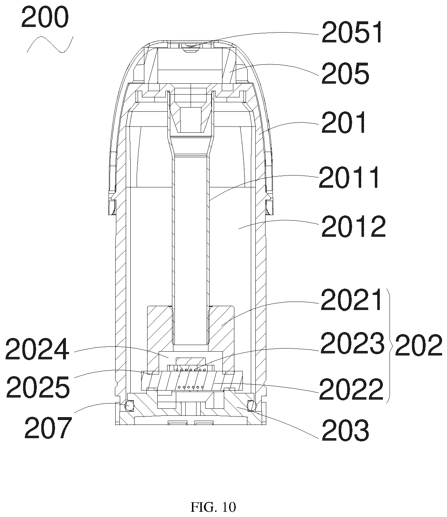

In one embodiment, please refer to FIG. 9 and FIG. 10, the atomizer 200 further includes a liquid storage member 201 and an atomizing assembly 202 arranged at one end of the liquid storage member 201. The liquid storage member 201 is provided with a vent tube 2011 therein. The liquid storage chamber 2012 is formed by the space between the inner wall of the liquid storage member 201 and the outer wall of the vent tube 2011. The atomizing base 203 is arranged at one end of the liquid storage member 201. The electrode sheet 204 is arranged on the atomizing base 203. The atomizing assembly 202 is arranged between the liquid storage member 201 and the atomizing base 203. The atomizing assembly 202 includes an atomizing tube 2021 arranged on the atomizing base 203, and a liquid guiding member 2022 and a heating member 2023 arranged in the atomizing tube 2021. One end of the atomizing tube 2021 is connected to the atomizing base 203, and the other end of the atomizing tube 2021 is connected to the vent tube 2011. The inner cavity in the atomizing tube 2021 forms an atomizing chamber 2024. The atomizing tube 2021 is provided with a liquid inlet 2025, and the liquid inlet 2025 is in communication with the liquid storage chamber 2012 and the atomizing chamber 2024. The liquid guiding member 2022 and the heating member 2023 are in contact with each other and are received in the atomizing chamber 2024. Both ends of the liquid guiding member 2022 are arranged in the liquid inlet 2025. The heating member 2023 is wound around the liquid guiding member 2022. The aerosol-forming substrate in the liquid storage chamber 2012 flows to the liquid guiding member 2022 through the liquid inlet 2025, the heating member 2023 is configured for heating the aerosol-forming substrate absorbed on the liquid guiding member 2022 to form smoke. An inserting slot 2031 is provided in the atomizing base 203, the inserting slot 2031 is provided at the first end of the atomizing base 203. The electrode sheet 204 is inserted into the atomizing base 203 through the inserting slot 2031, and the electrode sheet 204 is electrically connected to the heating member 2023, so as to realize the electrical connection between the heating member 2023 and the power supply device.

In one embodiment, the atomizer 200 further includes a mouthpiece 205 arranged at the other end of the liquid storage member 201 and a sealing member 206 arranged between the mouthpiece 205 and the liquid storage member 201. The inner cavity of the mouthpiece 205 is communicated with the inner cavity of the vent tube 2011. The mouthpiece 205 is provided with a smoke outlet 2051. The sealing member 206 is made of a sealing material such as silicone or rubber, so as to enhance the sealing performance between the mouthpiece 205 and the liquid storage member 201.

In one embodiment, a sealing ring 207 is arranged between the atomizing base 203 and the liquid storage member 201. The sealing ring 207 is made of a sealing material such as silicone or rubber, so as to enhance the sealing performance between the liquid storage member 201 and the atomizing base 203.

The atomizing base 203 is further provided with an air inlet, and the air inlet is communicated with the atomizing chamber 2024. When the user sucks the aerosol generating device, the aerosol-forming substrate in the liquid storage chamber 2012 flows to the liquid guiding member 2022 through the liquid inlet 2025; under the electric drive of the power supply device, the heating member 2023 heats the aerosol-forming substrate to form smoke which flows into the atomizing chamber 2024, the outside air enters the atomizing chamber 2024 through the air inlet to mix with the smoke, the mixed gas is sucked by the user after passing through the vent tube 2011.

A sheet inserting method using the automatic sheet inserting machine 100 is configured for inserting the electrode sheet 204 into the atomizing base 203, the atomizing base 203 includes a first end and a second end arranged oppositely, and the sheet inserting method includes the following step:
1) The atomizing base 203 is transported by the feeding mechanism 10 to the delivery mechanism 20, and the delivery mechanism 20 transports the atomizing base 203 to the conveying mechanism 30;
2) The conveying mechanism 30 transports the atomizing base 203 to the sheet inserting mechanism 40, the sheet inserting mechanism 40 inserts the electrode sheet 204 into the atomizing base 203 from the first end of the atomizing base 203 until the electrode sheet 204 extends to the second end of the atomizing base 203, a portion of the electrode sheet 204 protruding from the first end of the atomizing base 203 forms waste material;
3) The conveying mechanism 30 transports the atomizing base 203 after being inserted with the electrode sheet 204 in step 2) to the bending mechanism 50, and the bending mechanism 50 acts on the second end of the atomizing base 203 to bend the electrode sheet 204 at the second end of the atomizing base 203 to form a contact surface;
4) The conveying mechanism 30 transports the atomizing base 203 with the electrode sheet 204 being bent in step 3) to the shaping mechanism 60, and the shaping mechanism 60 acts on the contact surface to make the contact surface being closely attached to the atomizing base 203;
5) The conveying mechanism 30 transports the atomizing base 203 with the electrode sheet 204 being shaped in step 4) to the waste removal mechanism 70, and the waste removal mechanism 70 acts on the electrode sheet 204 at the first end of the atomizing base 203 so as to remove the waste material on the electrode sheet 204.

It is understood that in other embodiments not shown, the delivery mechanism 20 may be omitted, and the atomizing base 203 is directly transported by the feeding mechanism 10 to the conveying mechanism 30.

The automatic sheet inserting machine 100 provided by the present disclosure transports the atomizing base 203 to the conveying mechanism 30 through the feeding mechanism 10 and the delivery mechanism 20; the conveying mechanism 30 precisely conveys the atomizing base 203 to the sheet inserting mechanism 40, so that the sheet inserting mechanism 40 accurately inserts the electrode sheet 204 into the atomizing base 203; the electrode sheet 204 on the atomizing base 203 is bent to form a contact surface through the bending mechanism 50, and the contact surface is closely attached to the atomizing base 203 through the shaping mechanism 60, so that the electrode sheet 204 is convenient for electrical connection with the power supply device later. Finally, the waste material on the electrode sheet 204 is removed by the waste removal mechanism 70. The operation is simple, the positioning is accurate, and the installation efficiency is high.

The sheet inserting method of the automatic sheet inserting machine 100 provided by the present disclosure has simple operation, accurate positioning and high installation efficiency.

Taking the above-mentioned ideal embodiments according to the present disclosure as enlightenment, through the above description, the relevant persons can make various changes and modifications without departing from the concept of the present disclosure. The technical scope of the present disclosure is not limited to the content of the specification, and its technical scope should be determined according to the scope of the claims.

## Claims

1. An automatic sheet inserting machine configured to insert an electrode sheet into an atomizing base, the atomizing base comprising a first end and an opposite second end, wherein the automatic sheet inserting machine comprises a feeding mechanism, a conveying mechanism arranged at one side of the feeding mechanism, and a sheet inserting mechanism and a bending mechanism arranged at one side of the conveying mechanism, the sheet inserting mechanism and the bending mechanism are arranged at opposite sides of the conveying mechanism, the feeding mechanism is configured to arrange a plurality of the atomizing bases into a state in which the first ends of the atomizing bases face the same direction and transport the atomizing bases to the conveying mechanism, the conveying mechanism is configured to transport the atomizing base to the sheet inserting mechanism and the bending mechanism in sequence, the sheet inserting mechanism is configured to insert the electrode sheet into the atomizing base from the first end, the bending mechanism configured to act on the second end of the atomizing base to bend the electrode sheet located at the second end of the atomizing base to form a contact surface.

2. The automatic sheet inserting machine according to claim **1,** wherein the feeding mechanism comprises a circular vibrator, a linear vibrator located at one end of the circular vibrator, and a first sensor located at one side of the linear vibrator, one end of the linear vibrator is connected to the circular vibrator, the other end of the linear vibrator is connected to the conveying mechanism, the first sensor is configured for sensing the atomizing base in the linear vibrator.

3. The automatic sheet inserting machine according to claim **1,** wherein the conveying mechanism comprises a conveying track, a movable member arranged at one side of the conveying track, a fixture arranged on the movable member, and a first driving assembly and a second driving assembly that drive the movable member to move, the atomizing base is slidably arranged on the conveying track, the fixture corresponds to the atomizing base, the second driving assembly is enabled to drive the movable member to move towards the conveying track so that the fixture clamps the atomizing base, the first driving assembly is enabled to drive the movable member so as to drive the atomizing base to slide on the conveying track.

4. The automatic sheet inserting machine according to claim **3**, wherein a guiding groove is provided in the conveying track, the atomizing base is slidably arranged in the guiding groove, a groove wall of the guiding groove is provided with an opening, when the movable member is located close to the conveying track, the fixture passes through the opening to clamp the atomizing base.

5. The automatic sheet inserting machine according to claim **4**, wherein the second driving assembly comprises a second fixing member, a second cylinder arranged on the second fixing member, and a second sliding block connected to a protruding end of the second cylinder, the second sliding block is provided with a sliding groove, the movable member is slidably arranged in the sliding groove, the first driving assembly is arranged at one end of the movable member.

6. The automatic sheet inserting machine according to claim **1**, wherein the sheet inserting mechanism comprises a frame, a sliding seat slidably arranged on the frame, a clamping cylinder arranged on the sliding seat, and a clamping block connected to a protruding end of the clamping cylinder, the clamping block is arranged corresponding to the sliding seat; when the clamping cylinder is activated, the clamping block is driven to move toward the sliding seat and clamps the electrode sheet, or when the clamping cylinder is activated, the clamping block is driven to move away from the sliding seat and releases the electrode sheet.

7. The automatic sheet inserting machine according to claim **1**, wherein the bending mechanism comprises a bending fixing seat arranged at one side of the conveying mechanism, a bending cylinder arranged on the bending fixing seat, and a bending block connected to a protruding end of the bending cylinder, a running direction of the bending cylinder is perpendicular to an axial direction of the electrode sheet on the atomizing base.

8. The automatic sheet inserting machine according to claim **1**, wherein the automatic sheet inserting machine further comprises a shaping mechanism, the shaping mechanism is configured to act on the electrode sheet located at the second end of the atomizing base, so that the contact surface is closely attached to the atomizing base, the shaping mechanism comprises a shaping fixing seat arranged at one side of the conveying mechanism, a shaping cylinder arranged at the shaping fixing seat, and a shaping block connected to a protruding end of the shaping cylinder, a running direction of the shaping cylinder is perpendicular to the contact surface of the electrode sheet.

9. The automatic sheet inserting machine according to claim **1**, wherein the automatic sheet inserting machine further comprises a delivery mechanism arranged between the feeding mechanism and the conveying mechanism, the delivery mechanism is configured for transporting the atomizing base on the feeding mechanism to the conveying mechanism.

10. The automatic sheet inserting machine according to any one of claims **1** to **9**, wherein the automatic sheet inserting machine further comprises a waste removal mechanism connected to the conveying mechanism, the waste removal mechanism comprises a waste removal seat, a rotating block rotatably arranged on the waste removal seat, a waste removal rail arranged on one side of the rotating block, a pushing assembly arranged at one side of the waste removal rail, and a waste removal sliding block slidably arranged at one side of the waste removal rail, the rotating block is provided with a receiving groove for transporting the electrode sheet, the rotating block rotates to cause the receiving groove to align with the waste removal rail, the pushing assembly pushes the atomizing base in the receiving groove to slide to the waste removal rail, the waste removal sliding block slides relative to the waste removal rail and removes waste material of the electrode sheet protruding from the first end of the atomizing base.

11. A sheet inserting method using the automatic sheet inserting machine according to any one of claims **1** to **10** for inserting the electrode sheet into the atomizing base, wherein the sheet inserting method comprises the following steps:
1) the atomizing base is transported by the feeding mechanism to the conveying mechanism;
2) the conveying mechanism transports the atomizing base to the sheet inserting mechanism, the sheet inserting mechanism inserts the electrode sheet into the atomizing base;
3) the conveying mechanism transports the atomizing base after being inserted with the electrode sheet in step 2) to the bending mechanism, the bending mechanism acts on the second end of the atomizing base to bend the electrode sheet at the second end of the atomizing base to form a contact surface.

12. A conveying mechanism for conveying an atomizing base comprising a conveying track, a movable member arranged at one side of the conveying track, at least one fixture arranged at the movable member, and a first driving assembly and a second driving assembly that drive the movable member to move, wherein the atomizing base is slidably arranged on the conveying track, the fixture corresponds to the atomizing base, the second driving assembly is enabled to drive the movable member to move towards the conveying track so that the fixture clamps the atomizing base, the first driving assembly is enabled to drive the movable member so as to drive the atomizing base to slide on the conveying track.

13. The conveying mechanism according to claim **12**, wherein a guiding groove is provided in the conveying track, the atomizing base is slidably arranged in the guiding groove, a groove wall of the guiding groove is provided with an opening, when the movable member is located close to the conveying track, the fixture passes through the opening to clamp the atomizing base.

14. The conveying mechanism according to claim **12**, wherein the second driving assembly comprises a second fixing member, a second cylinder arranged on the second fixing member, and a second sliding block connected to a protruding end of the second cylinder, the second sliding block is provided with a sliding groove, the movable member is slidably arranged in the sliding groove, the first driving assembly is arranged at one end of the movable member.

15. The conveying mechanism according to claim **14,** wherein the first driving assembly comprises a first fixing member, a first cylinder arranged on the first fixing member, and a first sliding block connected to a protruding end of the first cylinder, the movable member is slidably connected to the first sliding block.

16. The conveying mechanism according to claim **15**, wherein the first cylinder and the first sliding block are arranged along an axial direction of the conveying track, the second cylinder and the second sliding block are arranged along a radial direction of the conveying track.

17. The conveying mechanism according to claim **13**, wherein the opening is provided in a bottom groove wall of the guiding groove.

18. An automatic sheet inserting machine configured for inserting an electrode sheet into an atomizing base, wherein the automatic sheet inserting machine comprises the conveying mechanism according to any one of claims **12** to **17**.

19. The automatic sheet inserting machine according to claim **18**, wherein the automatic sheet inserting machine further comprises a feeding mechanism connected to the conveying mechanism and a sheet inserting mechanism arranged at one side of the conveying mechanism, the feeding mechanism is configured for transporting the atomizing base to the conveying mechanism, the sheet inserting mechanism is configured for inserting the electrode sheet into the atomizing base.

20. The automatic sheet inserting machine according to claim **19**, wherein the feeding mechanism comprises a circular vibrator, a linear vibrator located at one end of the circular vibrator, and a first sensor located at one side of the linear vibrator, the first sensor is configured to detect whether there is an atomizing base in the linear vibrator.

21. The automatic sheet inserting machine according to claim **19**, wherein the automatic sheet inserting machine further comprises a delivery mechanism arranged between the feeding mechanism and the conveying mechanism, the delivery mechanism is configured for transporting the atomizing base on the feeding mechanism to the conveying mechanism.

22. A sheet inserting mechanism for inserting an electrode sheet into an atomizing base comprising a frame, a sliding seat slidably arranged on the frame, a clamping cylinder arranged on the sliding seat, and a clamping block connected to a protruding end of the clamping cylinder, wherein the clamping block is arranged corresponding to the sliding seat; when the clamping cylinder is activated, the clamping block is driven to move toward the sliding seat and clamps the electrode sheet, or when the clamping cylinder is activated, the clamping block is driven to move away from the sliding seat and releases the electrode sheet.

23. The sheet inserting mechanism according to claim **22**, wherein the sheet inserting mechanism further comprises a pushing cylinder for driving the sliding seat to slide, the pushing cylinder is arranged on the frame, the sliding seat is connected to a protruding end of the pushing cylinder, when the pushing cylinder is activated, the sliding seat is driven to move toward or away from the atomizing base.

24. The sheet inserting mechanism according to claim **22**, wherein the frame is provided with a moving groove, the sliding seat is slidably arranged in the moving groove.

25. An automatic sheet inserting machine configured for inserting an electrode sheet into an atomizing base, wherein the automatic sheet inserting machine comprises the sheet inserting mechanism according to any one of claims **22** to **24.**

26. The automatic sheet inserting machine according to claim **25,** wherein the automatic sheet inserting machine further comprises an electrode sheet feeding mechanism arranged at one side of the sheet inserting mechanism, the electrode sheet feeding mechanism is provided with a roll of electrode sheets; the clamping block is located close to the sliding seat and clamps one of the electrode sheets and tears the electrode sheet off.

27. The automatic sheet inserting machine according to claim **26**, wherein two adjacent electrode sheets are connected.

28. The automatic sheet inserting machine according to claim **25**, wherein the automatic sheet inserting machine further comprises a conveying mechanism arranged at one side of the feeding mechanism, the conveying mechanism is configured for conveying the atomizing base; when the clamping cylinder is activated, the clamping block is driven to move toward the sliding seat and clamps the electrode sheet, the sliding seat slides toward the conveying mechanism to insert the electrode sheet into the atomizing base.

29. The automatic sheet inserting machine according to claim **28**, wherein the automatic sheet inserting machine further comprises a bending mechanism arranged at one side of the conveying mechanism, the bending mechanism acts on one end of the atomizing base to bend the electrode sheet located at the one end of the atomizing base to form a contact surface.

30. The automatic sheet inserting machine according to claim **29**, wherein the bending mechanism comprises a bending fixing seat arranged at one side of the conveying mechanism, a bending cylinder arranged on the bending fixing seat, and a bending block connected to a protruding end of the bending cylinder.

31. The automatic sheet inserting machine according to claim **29**, wherein a running direction of the bending cylinder is perpendicular to an axial direction of the electrode sheet on the atomizing base.

32. A waste removal mechanism configured for removing waste material of an electrode sheet protruding from one end of the atomizing base, wherein the waste removal mechanism comprises a waste removal seat, a rotating block rotatably arranged on the waste removal seat, a waste removal rail arranged on one side of the rotating block, a pushing assembly arranged at one side of the waste removal rail, and a waste removal sliding block slidably arranged at one side of the waste removal rail, the rotating block is provided with a receiving groove for transporting the electrode sheet; the rotating block rotates to cause the receiving groove to align with the waste removal rail, the pushing assembly pushes the atomizing base in the receiving groove to slide to the waste removal rail, the waste removal sliding block slides relative to the waste removal rail and removes waste material of the electrode sheet protruding from one end of the atomizing base.

33. The waste removal mechanism according to claim **32**, wherein the waste removal mechanism further comprises a rotating assembly for driving the rotating block to rotate, the rotating assembly comprises a gear fixedly connected with the rotating block, a rack meshed with the gear, and a driving cylinder for driving the rack to move, the gear is rotatably arranged on the waste removal seat.

34. The waste removal mechanism according to claim **32**, wherein the pushing assembly comprises a movable cylinder and a pushing block connected to a protruding end of the movable cylinder, the pushing block is arranged corresponding to the waste removal rail.

35. The waste removal mechanism according to claim **32**, wherein the waste removal mechanism further comprises a waste removal cylinder arranged at one side of the waste removal rail, the waste removal sliding block is connected to a protruding end of the waste removal cylinder.

36. The waste removal mechanism according to claim **35**, wherein one side of the waste removal rail is provided with an opening, the waste removal cylinder drives the waste removal sliding block to slide and extends into one end of the waste removal rail through the opening, so as to remove the waste material formed by the electrode sheet protruding from one end of the atomizing base.

37. The waste removal mechanism according to claim **35**, wherein each of the waste removal sliding block and the waste removal cylinder has two in number, one waste removal sliding block corresponds to one waste removal cylinder, the waste removal sliding block is connected to the protruding end of a corresponding waste removal cylinder, and the two waste removal sliding blocks are arranged at opposite sides of the waste removal rail.

38. An automatic sheet inserting machine configured for installing an electrode sheet onto an atomizing base, wherein the automatic sheet inserting machine comprises the waste removal mechanism according to any one of claims **32** to **37.**

39. The automatic sheet inserting machine according to claim **38**, wherein the automatic sheet inserting machine further comprises a conveying mechanism connected with the waste removal mechanism, the conveying mechanism is configured for conveying the atomizing base, the rotating block rotates relative to the waste removal seat, so that the receiving groove is aligned with the conveying mechanism or the receiving groove is aligned with the waste removal rail.

40. The automatic sheet inserting machine according to claim **39**, wherein the automatic sheet inserting machine further comprises a sheet inserting mechanism arranged at one side of the conveying mechanism, the sheet inserting mechanism is configured for inserting the electrode sheet into the atomizing base.

41. The automatic sheet inserting machine according to claim **40**, wherein the automatic sheet inserting machine further comprises a bending mechanism arranged at one side of the conveying mechanism, the bending mechanism acts on one end of the atomizing base to bend the electrode sheet inserted in the atomizing base to form a contact surface.
